Europäisches Patentamt

European Patent Office

Office européen des brevets

(11) Numéro de publication: **0 351 393**
**A2**

(12) **DEMANDE DE BREVET EUROPEEN**

(21) Numéro de dépôt: **89870106.5**

(51) Int. Cl.5: **G 01 K 13/02**

(22) Date de dépôt: **03.07.89**

(30) Priorité: **11.07.88 BE 8800801**

(43) Date de publication de la demande:
**17.01.90  Bulletin  90/03**

(84) Etats contractants désignés:
**AT BE DE ES FR GB IT LU NL**

(71) Demandeur: **CENTRE DE RECHERCHES METALLURGIQUES CENTRUM VOOR RESEARCH IN DE METALLURGIE Association sans but lucratif Vereniging zonder winstoogmerk Rue Montoyer, 47 B-1040 Bruxelles  (BE)**

(72) Inventeur: **Poot, Eric**
**2/40, quai Van Hougarden**
**B-4000 Liège  (BE)**

**Bruyere, Michel**
**19/102, quai de Rome**
**B-4000 Liège  (BE)**

(74) Mandataire: **Lacasse, Lucien Emile et al**
**CENTRE DE RECHERCHES METALLURGIQUES Abbaye du Val-Benoît 11, rue Ernest Solvay**
**B-4000 Liège  (BE)**

(54) Procédé de contrôle de l'homogénéité transversale de la cuisson d'une charge d'agglomération.

(57) Pour contrôler l'homogénéité transversale de la cuisson d'une charge sur une bande d'agglomération, on choisit au moins une pluralité de points fixes par rapport à la charge, répartis suivant la largeur de la bande et situés à proximité immédiate de la surface inférieure de la charge. On mesure la température des fumées en ces points à des intervalles de temps prédéterminés, et on détermine au moins un profil transversal de la température des fumées et son évolution au cours du processus d'agglomération. On agit sur au moins un des paramètres de marche de l'agglomération en fonction des écarts constatés entre les profils transversaux mesurés et un profil transversal de référence de la température des fumées. La mesure de la température est de préférence effectuée en continu.

Fig.5

EP 0 351 393 A2

**Description**

Procédé de contrôle de l'homogénéité transversale de la cuisson d'une charge d'agglomération.

La présente invention concerne un procédé de contrôle de l'homogénéité transversale de la cuisson d'une charge d'agglomération. Elle vise particulièrement l'agglomération des minerais de fer, mais il va de soi qu'elle est également applicable au traitement sur bande d'autres matériaux granulaires ou pulvérulents.

Le principe de l'agglomération sur bande des minerais de fer est connu et appliqué depuis très longtemps. Dans cette technique, une bande sans fin circule autour de deux rouleaux horizontaux parallèles, espacés l'un de l'autre, et forme entre ces rouleaux deux brins horizontaux, à savoir un brin supérieur, qui est le brin actif, et un brin inférieur qui est le brin de retour. Le brin supérieur se déplace au-dessus d'une série de dispositifs d'aspiration, dits boîtes à vent. Dans la pratique, la bande est composée d'un grand nombre de chariots individuels jointifs, mais pouvant basculer l'un par rapport à l'autre au passage sur les rouleaux d'extrémité de la bande. Une charge d'agglomération, composée de minerai et de combustible, est déposée sur la bande, au début du brin supérieur, en une couche d'épaisseur sensiblement uniforme; la charge est ensuite mise à feu à sa surface supérieure au moyen d'une hotte d'allumage et, sous l'action de l'air aspiré par les boîtes à vent, un front de flamme se propage de haut en bas à travers toute la couche. Le front de flamme atteint la surface inférieure de la charge en un endroit appelé point de percée du front de flamme, qui est généralement situé à proximité de la fin du brin supérieur de la bande. A ce moment, la totalité de la charge a en principe subi la cuisson requise et le minerai est aggloméré.

Certaines bandes d'agglomération comportent une section de refroidissement située à la suite de la section de cuisson; de telles bandes permettent de procéder à un refroidissement contrôlé de l'aggloméré.

La régularité de la qualité de l'aggloméré, et notamment de sa réductibilité et de sa résistance mécanique, tant à froid qu'à chaud, exige que la cuisson soit homogène dans toute la charge.

On constate cependant en pratique que la charge d'agglomération présente une hétérogénéité transversale dont les causes sont diverses. Une cause importante d'hétérogénéité transversale est la variation de la densité de chargement de la bande, qui entraîne une variation de la perméabilité aux gaz de la charge. Une autre cause est connue sous le nom d'effet de paroi. Celui-ci se manifeste à proximité de parois latérales des chariots; il perturbe également la densité de chargement et la perméabilité aux gaz de la charge d'agglomération.

Du fait de cette hétérogénéité transversale de la charge, l'aggloméré ne subit pas une cuisson homogène et ses propriétés sont affectées d'une dispersion importante.

Pour disposer d'un garant permettant d'assurer la marche de la bande malgré cette hétérogénéité, il est de pratique courante d'ajouter à la charge une quantité supplémentaire de combustible. Cette façon de procéder va cependant à l'encontre de l'économie de l'opération, puisque l'on souhaite plutôt réduire la consommation de combustible. En outre, elle peut conduire à une cuisson excessive de certaines zones de la charge, ce qui n'est pas non plus bénéfique pour les propriétés de l'aggloméré.

Par ailleurs, il apparaît aujourd'hui des procédés d'agglomération des minerais basés sur le principe du frittage réactif, qui permettent de produire des agglomérés plus réductibles nécessitant moins de coke au haut fourneau. Ces procédés se déroulent à des températures relativement basses, de l'ordre de 1250 °C à 1350 °C, et ils requièrent un contrôle précis de la températue de la charge afin de maintenir cette température dans un domaine relativement étroit et d'assurer ainsi l'homogénéité de la cuisson de la charge.

Il existe de nombreux procédés de conduite d'une bande d'agglomération basés sur l'utilisation du profil longitudinal des températures des fumées, mesurées dans la succession des boîtes à vent situées sous la grille de cuisson. En règle générale, ces procédés ne tiennent aucun compte de l'hétérogénéité transversale de la charge d'agglomération. Ils ne permettent donc pas de réduire cette hétérogénéité transversale et de diminuer la dispersion des propriétés de l'aggloméré.

L'objectif principal de la présente invention est de proposer un procédé permettant de remédier aux inconvénients précités par un contrôle précis de l'homogénéité transversale de la cuisson de la charge d'agglomération.

Conformément à la présente invention, un procédé de contrôle de l'homogénéité transversale de la cuisson d'une charge sur une bande d'agglomération, est caractérisé en ce que l'on choisit au moins une pluralité de points fixes par rapport à la charge, répartis suivant la largeur de la bande et situés à proximité immédiate de la surface inférieure de la charge, en ce que l'on mesure la température des fumées auxdits points à des intervalles de temps prédéterminés, en ce que l'on détermine au moins un profil transversal de ladite température des fumées et son évolution au cours du processus d'agglomération et en ce que l'on agit sur au moins un des paramètres de marche de l'agglomération en fonction des écarts constatés entre lesdits profils transversaux mesurés et un profil transversal de référence de la température des fumées.

Par l'expression "à proximité immédiate", il faut comprendre que les points de mesure sont situés aussi près que possible de la surface inférieure de la charge.

Selon l'invention, la mesure de la températue des fumées auxdits points est avantageusement effectuée de manière continue.

On peut ainsi disposer d'une pluralité de profils longitudinaux des températures des fumées, desquels il est possible de déduire le profil transversal des températures des fumées en tout point de la bande. En se basant sur ces informations, on peut également établir les distributions transversales de tout point de référence considéré, par exemple les points correspondant aux maxima des températures ou tout autre point caractérisé par une température de référence. Cette exploitation des données fournies par la mesure des températures permet d'établir une carte de l'état thermique des fumées en tout point de la bande.

Il est possible d'utiliser divers moyens pour contrôler et éventuellement corriger l'homogénéité de la cuisson de la charge.

Dans le cadre du procédé de l'invention, il s'est notamment avéré intéressant de déterminer le profil transversal de la température maximum des fumées et la distribution transversale des points de percée du front de flamme; cette distribution transversale peut être comparée à une distribution transversale de référence desdits points de percée et, en fonction des écarts constatés, on agit sur au moins un des paramètres de marche de l'agglomération dans le sens approprié pour réduire, respectivement annuler, ces écarts.

En particulier, on n'agit sur au moins un desdits paramètres de marche que si ledit écart constaté dépasse une valeur prédéterminée.

Selon une autre variante, on mesure l'intervalle de temps compris entre l'apparition du premier point de percée et l'apparition du dernier point de percée et, si la durée de cet intervalle dépasse une valeur prédéterminée, on agit sur au moins un des paramètres de marche de l'agglomération pour ramener cet intervalle de temps dans les limites prédéterminées.

On peut encore, sans sortir du cadre de l'invention, utiliser d'autres données fournies par lesdits profils de température pour effectuer lesdites comparaisons avec des valeurs de référence; à titre d'exemple, on citera d'une part la différence entre les valeurs extrêmes de la température maximum de fumées, et d'autre part la différence entre les aires surfacées des courbes de température au-delà d'une valeur prédéterminée, par exemple 100 °C, l'une ou l'autre de ces différences ne pouvant dépasser une valeur appropriée prédéterminée sans entraîner une action sur au moins un des paramètres de marche de l'agglomération.

Parmi les paramètres de marche importants qui peuvent influencer l'homogénéité transversale de la cuisson d'une charge d'agglomération, on citera principalement :

(a) la densité de chargement suivant la largeur de la bande;
(b) la distribution transversale de l'allumage;
(c) les entrées d'air latérales dues à l'effet de paroi.

La présente invention vise essentiellement à détecter et à corriger les causes conduisant à une hétérogénéité transversale de longue durée de la cuisson de la charge d'agglomération.

A cet effet, il est avantageux d'effectuer plusieurs fois lesdites mesures de température et l'établissement desdites profils transversaux, de déterminer la valeur moyenne desdites températures et d'établir le profil transversal moyen correspondant, de comparer ce profil transversal moyen avec un profil transversal de référence et d'agir sur au moins un desdites paramètres de marche en fonction des écarts constatés lors de ladite comparaison.

La distribution transversale des points de percée, obtenue par le procédé de l'invention, constitue une bonne indication de l'homogénéité transversale de la cuisson de la charge. Cette distribution est influencée notamment par les trois paramètres de marche mentionnés plus haut.

Selon une variante particulière du procédé de l'invention, on détermine une position moyenne des points de percée à partir de la distribution transversale mesurée desdits points de percée et l'on agit sur au moins un des paramètres de marche de l'agglomération afin de réduire, respectivement d'annuler l'écart entre la position mesurée et la position moyenne desdits points de percée.

A cet effet, on repère les points de percée qui sont en avance, respectivement en retard, par rapport à la position moyenne.

Cette avance signifie que le point de percée a été atteint trop rapidement, par rapport à la position moyenne, et donc qu'il convient de retarder cette percée. Pour cela, on peut notamment ralentir la progression du front de flamme par une réduction locale de la perméabilité de la charge. Une telle action est dite "négative", car elle tend à diminuer la productivité de la bande.

A l'inverse, un retard signifie qu'il convient d'avancer la percée par une action dite "positive" consistant par exemple à accélérer la progression du front de flamme par une augmentation locale de la perméabilité de la charge.

D'autres particularités et avantages de la présente invention apparaîtront à la lecture de la description détaillée qui va suivre, portant sur des modes préférés de mise en oeuvre et faisant référence aux dessins annexés dans lesquels la

figure 1 montre, en élévation et en plan, un chariot d'une bande d'agglomération, équipé de dispositifs de mesure de la température des fumées; la

figure 2 représente des profils longitudinaux de température des fumées relevés par le chariot la figure 1; la

figure 3 montre des isothermes obtenus à partir des profils de température de la figure 2; la

figure 4 illustre la distribution transversale de la température des fumées dans différentes sections droites de la bande; et la

figure 5 montre un exemple de distribution transversale du point de percée du front de flamme.

Ces figures ne constituent bien entendu que des représentations schématiques, sans échelle particulière, qui sont uniquement destinées à illustrer la présente invention.

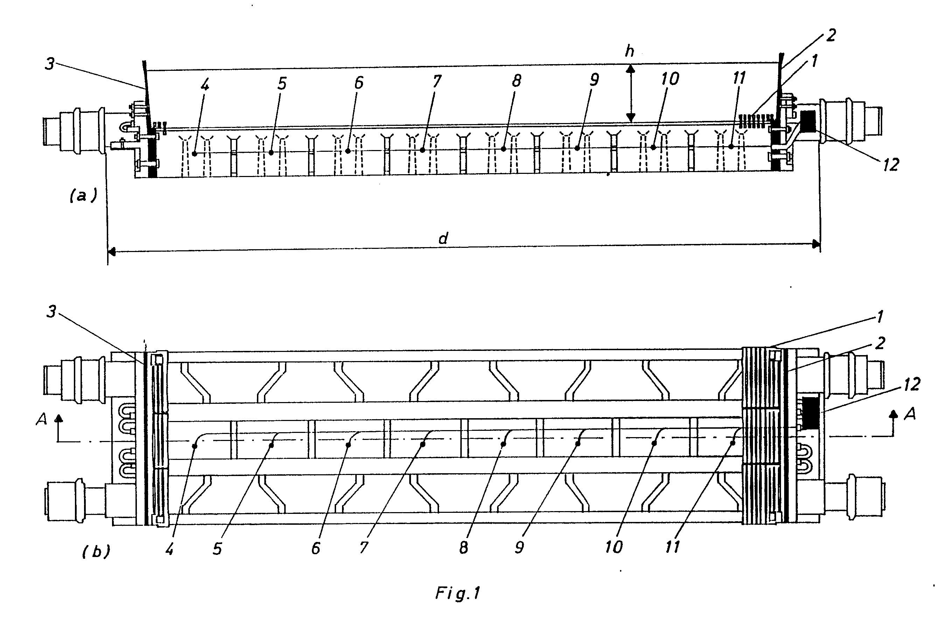

La figure 1 représente en deux vues un chariot de type courant d'une bande d'agglomération de mineral de fer. La vue (a) montre, en élévation, une coupe simplifiée suivant la ligne A-A de la vue (b); cette vue (b) est une vue en plan du chariot.

De façon classique, le chariot comprend un fond horizontal constitué par une grille 1, qui n'est que partiellement représentée pour la clarté du dessin, et des parois latérales 2, 3. De part et d'autre du chariot sont prévus des tourillons d'appui, séparés par une distance d qui vaut par exemple environ 5 m. Sur le chariot, on peut déposer une couche de mélange d'agglomération de hauteur h. La structure du chariot sous la grille 1, comprend une série de parois définissant des compartiments à travers lesquels les fumées de combustion circulent en direction des boîtes à vent, non représentées. Des thermocouples 4 -11 sont disposés dans les compartiments centraux, suivant l'axe longitudinal du chariot. Ils sont reliés à un équipement de transmission 12, mobile avec le chariot, qui envoie les valeurs de température mesur par ces thermocouples vers une station fixe d'exploitation, non représentée.

Pendant qu'il parcourt le brin supérieur de la bande, depuis le chargement jusqu'à la sortie, le minerai présent sur ce chariot subit un cycle thermique complet de cuisson et de refroidissement. Ce cycle de température est souvent exprimé par le profil longitudinal de la température des fumées, mesurée dans les boîtes à vent successives.

Conformément au procédé de l'invention, on mesure la température des fumées en une pluralité de points d'un même chariot, répartis selon la largeur de la bande d'agglomération.

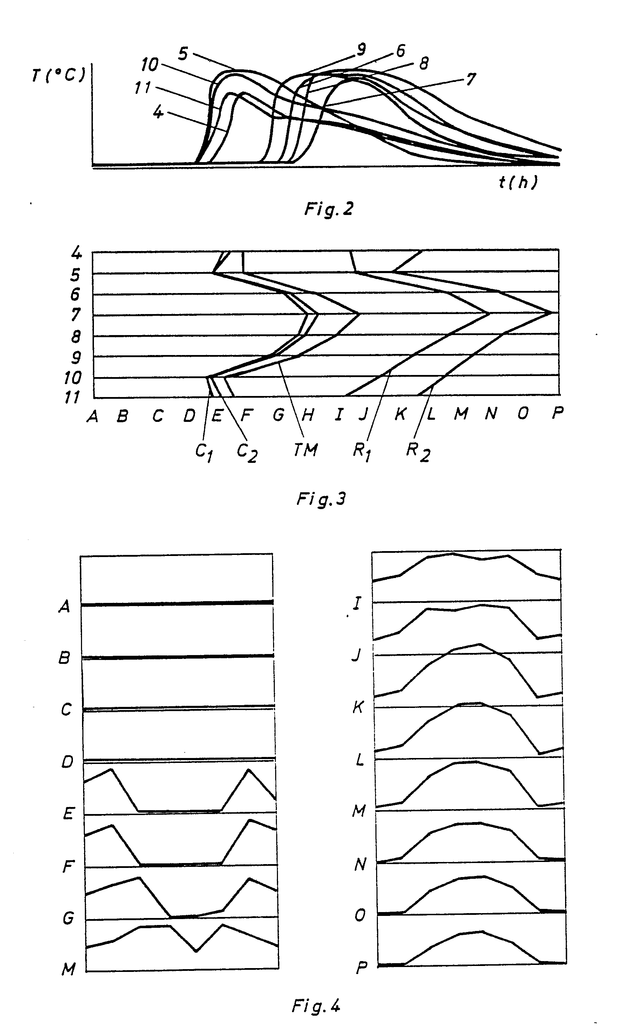

Dans la figure 2, on a représenté, en fonction du temps ou de la longueur de la bande, les profils longitudinaux de température relevés par les thermocouples 4 à 11 de la figure 1, dans le cas d'une bande d'agglomération comprenant une section de refroidissement.

On constate nettement que certaines zones de la couche de minerai atteignent une température maximale, c'est-à-dire en fait subissent la cuisson, plus tôt que d'autres zones. Le refroidissement des diverses zones s'effectue en général dans le même ordre que leur cuisson.

En reportant ces données sur une vue en plan de la bande, on constate que les zones centrales de la charge sont nettement en retard par rapport aux zones latérales, tant pour la cuisson que pour le refroidissement.

Dans la figure 3, on tracé uniquement, afin de ne pas surcharger le dessin :
- deux isothermes au chauffage : C1, C2;
- la courbe des maxima de température : TM,
- deux isothermes au refroidissement : R1, R2.

Toutes ces courbes ont la même allure et confirment l'hétérogénéité transversale du processus d'agglomération. La répartition transversale du point de percée du front de flamme correspond sensiblement à la courbe TM. La figure 4 illustre l'évolution d'un profil transversal.

Dans les sections A à D, la température des fumées reste uniforme, par exemple sensiblement égale ou légèrement supérieure à celle de l'air aspiré : c'est la période pendant laquelle le front de flamme progresse dans les couches supérieures de la charge et où les fumées sont refroidies en traversant les couches inférieures.

Les sections E, F, G montrent que la température des fumées s'élève rapidement à proximité des parois sans augmenter au centre de la bande : le point de percée est atteint dans les zones latérales de la charge.

De H à K, le centre est progressivement plus chaud que les bords : le point de percée y est atteint à sont tour, tandis que les zones latérales commencent déjà à se refroidir.

Dans les sections L à P, le refroidissement continue, en général plus rapidement en paroi qu'au centre de la charge.

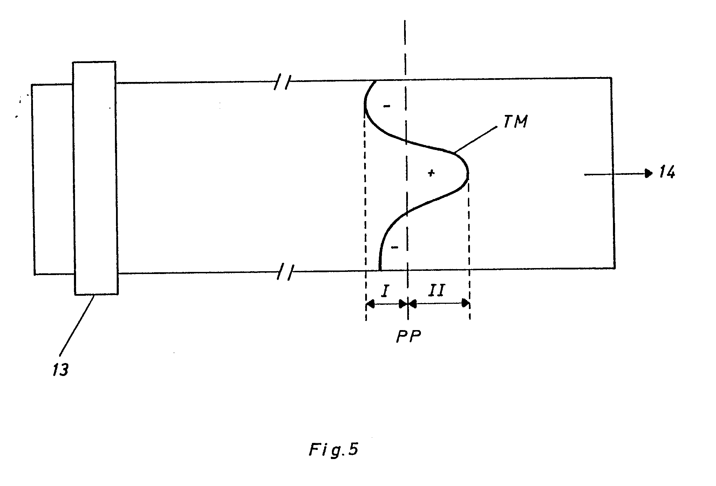

On a reproduit dans la figure 5, l'allure de la répartition transversale du point de percée, telle qu'elle était illustrée par la courbe TM dans la figure 3.

Dans cette représentation, le repère 13 désigne la machine de chargement et la bande se déplace de gauche à droite (flèche 14).

Considérant cette courbe TM, on détermine la droite moyenne PP telle que les surfaces repérées respectivement (+) et (-) soient égales en valeur absolue; cette droite PP représente la position moyenne de la ligne des points de percée, que l'on atteindrait si l'homogénéité transversale de l'opération était parfaite. Par rapport à cette position moyenne PP, les points de la courbe TM situés dans la région I indiquent une avance du point de percée réel; pour ramener ces points vers la position moyenne, il faut recourir éventuellement à une action qualifiée plus haut de "négative", puisqu'elle retarde la progression du front de flamme dans ces zones de la charge.

A l'inverse, les points de la courbe TM situés dans la région II indiquent un retard du point de percée réel; leur déplacement vers la position moyenne requiert une action dite "positive", qui accélère la progression du front de flamme dans cette zone de la charge.

Au sens de la présente invention, une action dite "négative", respectivement "positive", est une action :
- qui provoque localement une réduction, respectivement une augmentation de la perméabilité de la change;
- qui produit une augmentation, respectivement une diminution de la hauteur h de la charge.

Parmi les actions "négatives" on peut encore ranger la réduction des entrées d'air latérales et la diminution de l'effet des parois.

Le procédé de l'invention permet de détecter les défauts d'homogénéité transversale du processus d'agglomération. Par comparaison entre les valeurs relevées et une référence, par exemple entre la courbe TM et la droite moyenne PP, il permet également de commander et de piloter les actions requises pour remédier à ces défauts d'homogénéité.

Après avoir procédé à la correction d'un tel défaut, il est souhaitable de laisser se dérouler un certain nombre de cycles, c'est-à-dire d'attendre quelques passages du chariot équipé des thermocouples, pour évaluer l'effet de la correction apportée et décider si elle est suffisante.

Parmi les actions de correction que l'on peut appliquer, on citera notamment :

- le tassement différentiel de la charge le long des parois latérales au moyen de rouleaux (action négative; réglage difficile);
- le tassement différentiel de la charge sur toute la largeur de la bande, au moyen d'un registre de chargement modulaire (action positive ou négative selon le cas; réglage possible);
- la création d'un gradient de perméabilité par ségrégation granulométrique de la charge (action positive ou négative selon les cas; réglage possible);
- la modulation de la perte de charge à travers la charge, sans tassement différentiel, au moyen d'un registre de hauteur de couche non horizontal (action positive ou négative selon le cas; réglage possible).

Il est évident que ces actions ne sont mentionnées qu'à titre d'exemple et qu'un homme de métier pourrait en envisager d'autres sans sortir du cadre de l'invention.

## Revendications

1. Procédé de contrôle de l'homogénéité transversale de la cuisson d'une charge sur une bande d'agglomération, caractérisé en ce que l'on choisit au moins une pluralité de points fixes par rapport à la charge, répartis suivant la largeur de la bande et situés à proximité immédiate de la surface inférieure de la charge, en ce que l'on mesure la température des fumées auxdits points à des intervalles de temps prédéterminés, en ce que l'on détermine au moins un profil transversal de ladite température des fumées et son évolution au cours du processus d'agglomération, et en ce que l'on agit sur au moins un des paramètres de marche de l'agglomération en fonction des écarts constatés entre lesdits profils transversaux mesurés et un profil transversal de référence de la température des fumées.

2. Procédé suivant la revendication 1, caractérisé en ce que la mesure de la température des fumées est effectuée en continu.

3. Procédé suivant l'une ou l'autre des revendications 1 et 2, caractérisé en ce que l'on détermine le profil transversal de la température maximum des fumées, en ce que l'on en déduit la distribution transversale des points de percée du front de flamme, en ce que l'on compare cette distribution transversale avec une distribution transversale de référence desdits points de percée et en ce que l'on agit, en fonction des écarts constatés, sur un moins un des paramètres de marche de l'agglomération dans le sens approprié pour réduire, respectivement annuler, lesdits écarts.

4. Procédé suivant l'une ou l'autre des revendications 1 à 3, caractérisé en ce que l'on agit sur un desdits paramètres de marche si au moins un desdits écarts constatés dépasse une valeur prédéterminée.

5. Procédé suivant l'une ou l'autre des revendications 1 à 4, caractérisé en ce que l'on mesure l'intervalle de temps compris entre l'apparition du premier point de percée et l'apparition du dernier point de percée et, si la valeur de cet intervalle dépasse une valeur prédéterminée, on agit sur au moins un des paramètres de marche de l'agglomération pour ramener cet intervalle de temps dans les limites prédéterminées.

6. Procédé suivant l'une ou l'autre des revendications 3 à 5, caractérisé en ce que l'on détermine une position moyenne des points de percée à partir de la distribution transversale mesurée desdits points de percée, et en ce que l'on agit sur au moins un des paramètres de marche de l'agglomération afin de réduire, respectivement d'annuler, l'écart entre la position mesurée et la position moyenne desdits points de percée.

7. Procédé suivant l'une ou l'autre des revendications 1 à 6, caractérisé en ce que l'on agit sur la distribution transversale de la perméabilité de la charge.

8. Procédé suivant l'une ou l'autre des revendications 1 à 7, caractérisé en ce que l'on agit sur la distribution transversale de l'allumage de la charge.

9. Dispositif pour la mise en oeuvre du procédé suivant l'une ou l'autre des revendications 1 à 8, caractérisé en ce qu'il comporte un chariot d'agglomération équipé de thermocouples répartis suivant la largeur de la bande et d'un équipement de transmission des valeurs mesurées vers un équipement de réception et d'exploitation de ces valeurs.

*(a)*

*(b)*

*Fig.1*

EP 0 351 393 A2

*Fig. 2*

*Fig. 3*

*Fig. 4*

Fig.5

EP 0 351 393 A2